# EUROPEAN PATENT SPECIFICATION

(11) **EP 1 576 889 B1**
(45) Date of publication and mention of the grant of the patent: **14.10.2009**
(21) Application number: 04250803.6
(22) Date of filing: 16.02.2004
(51) Int. Cl.: A23L 1/00, A23L 1/16, A23P 1/08, A21C 9/04

(54) **Frozen layered food product**
Mehrschichtiges gefrorenes Lebensmittel
Produit alimentaire multi-couche surgelé

(43) Date of publication of application: 21.09.2005
(73) Proprietor: Unilever PLC, London EC4Y 0DY (GB); Unilever N.V., 3013 AL Rotterdam (NL)
(72) Inventor: Panaioli, Sandro, Sagit s.r.l. Unilever Italia, 04012 Cisterna di Latina (IT); Tamai, Michela, Sagit s.r.l. Unilever Italia, 04012 Cisterna di Latina (IT); Treggiari, M., Sagit s.r.l. Unilever Italia, 04012 Cisterna di Latina (IT); White, Alexander A., Sagit s.r.l.Unilever Italia, 04012 Cisterna di Latina (IT)
(74) Representative: Tjon, Hon Kong Guno

(56) References cited:
- EP-A- 0 643 915
- EP-A- 0 882 406
- EP-A- 0 882 407
- EP-A- 1 380 216
- US-A- 4 418 085
- US-B1- 6 558 720

## Description

The present invention relates to a frozen layered food product, a process for manufacturing the said food product and apparatus for manufacturing the said food products. The invention relates, in particular, to frozen lasagne.

The advent of ready prepared meals is now an integral part of the modern consumer's lifestyle permitting them to spend more time at work or at leisure. However the increasing demands of modern living require ready prepared meals which can be reheated more quickly.

Frozen lasagne is available as a ready meal. A problem with known frozen lasagne is the length of time taken for reheating which is typically 45 minutes in a convection oven or 8-9 minutes in a microwave oven. The inventors have provided a frozen lasagne which can be reheated in a reduced time by producing a lasagne which permits air between the various layers of ingredients which make up a lasagne to increase heat transfer.

In EP 882 406 A1 (Nestle) a method of preparing an alimentary product with pasta layers, in particular suitable for the preparation of lasagne is described. The method comprises the steps of providing a plurality of disconnected segments of an alimentary product, each segment comprising layers of pasta, arranging the segments in a pan, adding a cooking liquid to said pan, and heating the segments and the cooking liquid.

In EP 1 380 216 A1 (Unilever) a frozen pasta product is described comprising at least three pasta layers, said pasta layers being interleaved with one or more sauce layers, wherein at least two of said pasta layers are provided by a rectangular pasta sheet extending around the remaining layers of the product and sealed along two opposing edges. Wrapping the remaining layers in this way serves to maintain the integrity of the small lasagnes on reheating, thereby allowing the novel dish of discrete small lasagnes with a plurality of visible layers to be served after a short re-heat time.

US 4 418 085 (Nuitoni Foods Corporation) describes a process for automatically and continuously manufacturing lasagne by forming a continuous sheet of pasta which contains first through fifth longitudinal surface area rows; passing the pasta under a first sauce dispenser which dispenses different kinds of sauces onto the middle three surface area rows of the sheet of pasta, folding the respective outer surface area rows over the respective next inner surface area rows; dispensing additional sauce over an exposed surface of one of the outer folded surface area rows; and further folding of the sheet of pasta so that the first through fifth surface area rows are vertically aligned. Subsequently, the sheet of pasta is cut into predetermined sizes, and each predetermined size is placed into its own corresponding food tray. Thereafter, each predetermined size of lasagne is frozen. This process allows lasagne to be efficiently and quickly produced at a relatively low cost.

In EP 882 407 A1 (Nestle) an individually frozen alimentary product comprising pasta and a filling such as lasagne is disclosed. The alimentary product includes an edible coating substantially encapsulating the pasta and filling, the coating being effective to reduce attachment between the alimentary product and a cooking surface. The edible coating may be a sauce e.g. cheese or béchamel or tomato sauce.

### Summary of the Invention

Thus is a first aspect of the invention, a process for manufacturing a frozen layered food product is provided comprising the steps of: providing a first pre-frozen composite sheet comprising a sheet of a first ingredient and a first filling, the sheet of first ingredient including a first upper face and first lower face, the sheet of first ingredient coated on at least one of the first upper and first lower faces with a first filling; and providing a second pre-frozen composite sheet comprising a sheet of a second ingredient and a second filling, the sheet of second ingredient including a second upper face and second lower face, the sheet of second ingredient coated on at least one of the second upper and second lower faces with a second filling; and placing the second composite sheet on top of the first composite sheet,wherein the first upper face and second lower face are in opposition.

The first and second ingredient may be selected from dried pasta, cooked pasta, raw aubergine, cooked aubergine, raw zucchini, cooked zucchini, raw meat, cooked meat, fruit, cooked fruit. Optionally the first and second ingredients are identical.

The first and second fillings may be selected from ragout, vegetable stew, meat stew cheese, any combination of the foregoing, and fruit stew. Optionally the first and second fillings are identical.

The process may comprise the additional step of providing a first layer of sauce in opposition to the first lower face. The layer of sauce may be selected from bechamel, savoury and sweet.

The process may comprise the additional step of providing a first layer of cheese in opposition to the second upper face. The cheese is preferably parmesan cheese.

In a second aspect of the invention, a frozen layered food product manufactured in accordance with the process is provided.

In a third aspect of the invention, an apparatus for manufacturing a frozen layered food product is provided, the apparatus comprising a first conveyor comprising a plurality of first trays, each first tray conveying a sheet of food ingredient, a station for dosing a filling onto one face of a sheet of food ingredient thereby to form a composite sheet, a first freezer to freeze a composite sheet thereby to form a frozen composite sheet, a means for guiding a frozen composite sheet onto a first tray at an upstream location on the conveyor, the said means suitable for guiding an nth frozen composite sheet onto an (n-1)th frozen composite sheet at the upstream or a downstream location thereby to form a layered food product, and a second freezer for freezing the layered food product, the second freezer located downstream of the downstream location. n is any whole integer.

The apparatus may additionally comprise a first sauce station for dosing with a layer of sauce a first tray upstream of the said upstream location.

The apparatus may further comprise a first cheese station for dosing with a layer of cheese a face of a composite sheet in a first tray between the said upstream location and the downstream location.

The apparatus may also comprise a second cheese station for dosing with a layer of cheese a face of a composite sheet in a first tray between the said downstream location and the second freezer.

The station for dosing a filling comprises a second conveyor preferably comprises a plurality of second trays each adapted to convey a sheet of ingredient, each second tray comprising side walls which pivot between a first position in the plane of the base of the second tray and a second position wherein the edge of the side walls distal from the base of the second tray is raised above the plane of the base, and a means of raising the side walls from the first to the second position thereby to retain the filling on the sheet of ingredient prior to freezing of the composite sheet.

### Brief Description of the Figures

The invention will now be illustrated with reference to the figures in which:
Figure 1 shows an embodiment of the frozen layered food product of the invention; and
Figure 2 shows an apparatus for manufacturing the embodiment of layered food product of the invention illustrated in figure 1.

### Detailed Description

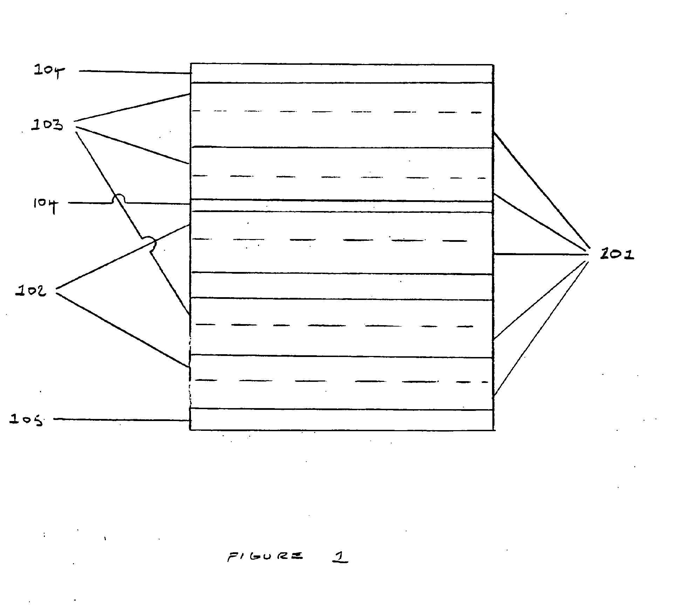

In figure 1 a frozen lasagne comprises five layers, each layer comprising cooked pasta sheet (101) and mozzarella cheese/bechamel sauce (102) or cooked pasta sheet (101) and vegetable mix/bechamel sauce (103). The lasagne additionally includes a bottom layer of bechamel sauce (105) and layers of parmesan cheese (104) between the third layer from the bottom and the fourth layer from the bottom, and on top of the fifth layer from the bottom.

The proportions of constituents in the lasagne comprise, numbering the layers from the bottom:

| | | % w/w |
|---|---|---|
| bottom layer | parmesan cheese | 7 |
| first layer | cooked pasta sheet | 5 |
| | mozzarella cheese/bechamel sauce | 11 |
| second layer | cooked pasta sheet | 5 |
| | vegetable mix/bechamel sauce | 11 |
| third layer | cooked pasta sheet | 5 |
| | mozzarella cheese/bechamel sauce | 11 |
| middle layer | parmesan cheese | 2 |
| fourth layer | cooked pasta sheet | 5 |
| | vegetable mix/bechamel sauce | 11 |
| fifth layer | cooked pasta sheet | 5 |
| | vegetable mix/bechamel sauce | 20 |
| top layer | parmesan cheese | 2 |

The pasta is prepared from:

| | % w/w |
|---|---|
| semolina | 74.2000 |
| water | 0.3000 |
| egg | 22.1850 |
| spinach | 3.3150 |

in the usual way. The pasta is formed into sheets by extrusion and then cooked in salted water.

The bechamel sauce is prepared from:

| | % w/w |
|---|---|
| sunflower oil | 2.9645 |
| wheat flour | 2.9645 |
| water | 80.0403 |
| skimmed milk powder | 8.5969 |
| salt | 0.9634 |
| nutmeg | 0.0237 |
| cream | 4.4467 |

in the usual way.

The mozzarella cheese/bechamel sauce consists of 50% w/w of each component.

The vegetable mix is prepared by cooking the following ingredients together at 100 degrees Centigrade:

| | Kg |
|---|---|
| Roasted diced aubergines | 25.381 |
| Roasted diced zucchini | 25.381 |
| Peas | 15.228 |
| Diced pepperoni | 11.421 |
| Diced asparagus | 11.421 |
| Diced carrots | 7.614 |
| Sunflower oil | 5.076 |
| Salt | 0.264 |

The vegetable mix/bechamel sauce consists of 76.92% w/w vegetable mix and 23.08% w/w bechamel sauce.

The frozen lasagne can be reheated in a convection oven in 20 minutes and in a microwave oven in 5-6 minutes.

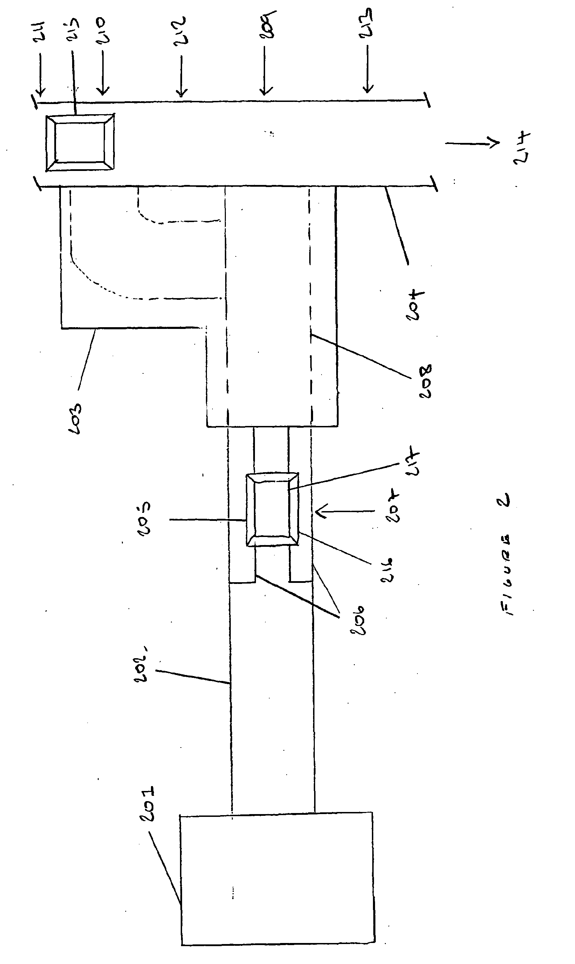

Figure 2 shows an apparatus for manufacturing the frozen layered food product illustrated in figure 1, the apparatus comprising a pasta sheet preparation station (201), a first conveyor (202) comprising a plurality (only one shown) of first trays (205), a first freezer (203), a second conveyor (204) comprising a plurality (only one shown) of second trays (215) and a second freezer (214).

In use, pasta sheets are prepared in the pasta sheet preparation station (201) and each sheet is conveyed along the first conveyor (202) in a first tray (205) towards a pair of flap lifting rails (206). Each first tray comprises a base (217) and pivoting side walls (216). The rails (206) lift the edge of the pivoting side walls (216) distal from the base of each first tray above the plane of the base thereby to provide means for retaining any first tray contents within the first tray.

A filling comprising either mozzarella cheese/bechamel sauce or vegetable mix/bechamel sauce at 85-90 degrees Centigrade is dosed onto each pasta sheet at a filling station (207). Thereafter, each pasta sheet and filling, known as a composite sheet, is conveyed to the first freezer (203) and frozen at -30 degrees Centigrade.

Each frozen composite sheet is then guided by conveyors to an upstream location (210) on the second conveyor or a downstream location (209) on the second conveyor.

The frozen layered food product illustrated in figure 1 is assembled in the following manner. Bechamel sauce at 85-90 degrees Centigarde is dosed onto one second tray (215) at a first sauce station (211) upstream of the upstream location (210).

The second tray is then conveyed to the upstream location (210) where three frozen composite sheets are guided in succession to the second tray thereby to form the first three layers of the layered food product illustrated in figure 1.

The second tray is then conveyed to a first cheese station (212) where parmesan cheese is added to the top of the third layer.

The second tray is then conveyed further to the downstream location (209) where two further frozen composite sheets are added on top of the third layer in accordance with the layered food product illustrated in figure 1.

The second tray is then conveyed to a second cheese station (213) where a second layer of parmesan cheese is added in accordance with the layered food product illustrated in figure 1.

The second tray is then conveyed to the second freezer (214) where it is frozen at -30 degrees Centigrade.

## Claims

1. A process for manufacturing a frozen layered food product comprising the steps of: providing a first pre-frozen composite sheet comprising a sheet of a first ingredient and a first filling, the sheet of first ingredient including a first upper face and first lower face, the sheet of first ingredient coated on at least one of the first upper and first lower faces with a first filling; providing a second pre-frozen composite sheet comprising a sheet of a second ingredient and a second filling, the sheet of second ingredient including a second upper face and second lower face, the sheet of second ingredient coated on at least one of the second upper and second lower faces with a second filling; and placing the second composite sheet on top of the first composite sheet, wherein the first upper face and second lower face are in opposition.

2. A process according to claim 1 wherein the first and second ingredient is selected from dried pasta, cooked pasta, raw aubergine, cooked aubergine, raw zucchini, cooked zucchini, raw meat, cooked meat, fruit, cooked fruit.

3. A process according to claim 2 wherein the first and second ingredients are identical.

4. A process according to any one of the preceding claims wherein the first and second fillings are selected from ragout, vegetable stew, meat stew cheese, any combination of the foregoing, and fruit stew.

5. A process according to claim 4 wherein the first and second fillings are identical.

6. A process according to any one of the preceding claims comprising the additional step of providing a first layer of sauce in opposition to the first lower face.

7. A process according to claim 6 wherein the layer of sauce is selected from bechamel, savoury and sweet.

8. A process according to any one of the preceding claims comprising the additional step of providing a first layer of cheese in opposition to the second upper face.

9. A process according to claim 8 wherein the cheese is parmesan cheese.

10. A frozen layered food product manufactured in accordance with the process of any one of the preceding claims.

11. An apparatus for manufacturing a frozen layered food product, the apparatus comprising a first conveyor comprising a plurality of first trays, each first tray conveying a sheet of food ingredient, a station for dosing a filling onto one face of a sheet of food ingredient thereby to form a composite sheet, a first freezer to freeze a composite sheet thereby to form a frozen composite sheet, a means for guiding a frozen composite sheet onto a first tray at an upstream location on the conveyor, the said means suitable for guiding an nth frozen composite sheet onto an (n-1)th frozen composite sheet at the upstream or a downstream location thereby to form a layered food product, and a second freezer for freezing the layered food product, the second freezer located downstream of the downstream location.

12. An apparatus according to claim 11 additionally comprising a first sauce station for dosing with a layer of sauce a first tray upstream of the said upstream location.

13. An apparatus according to claim 11 or-claim 12 additionally comprising a first cheese station for dosing with a layer of cheese a face of a composite sheet in a first tray between the said upstream location and the downstream location.

14. An apparatus according to any one of claims 11 to 13 additionally comprising a second cheese station for dosing with a layer of cheese a face of a composite sheet in a first tray between the said downstream location and the second freezer.

15. An apparatus according to any one of claims 11 to 14 wherein the station for dosing a filling comprises a second conveyor comprising a plurality of second trays each adapted to convey a sheet of ingredient, each second tray comprising side walls which pivot between a first position in the plane of the base of the second tray and a second position wherein the edge of the side walls distal from the base of the second tray is raised above the plane of the base, and a means of raising the side walls from the first to the second position thereby to retain the filling on the sheet of ingredient prior to freezing of the composite sheet.

## Patentansprüche

1. Verfahren zum Herstellen eines gefrorenen, geschichteten Lebensmittelprodukts, das die folgenden Schritte umfasst: Bereitstellen einer ersten vorgefrorenen Verbundschicht, die eine Schicht einer ersten Zutat und eine erste Füllung enthält, wobei die Schicht der ersten Zutat eine erste obere Fläche und eine erste untere Fläche aufweist, wobei die Schicht der ersten Zutat auf der ersten oberen und/oder der ersten unteren Fläche mit einer ersten Füllung beschichtet ist; Vorsehen einer zweiten vorgefrorenen Verbundschicht, die eine Schicht einer zweiten Zutat und eine zweite Füllung enthält, wobei die Schicht der zweiten Zutat eine zweite obere Fläche und eine zweite untere Fläche aufweist, wobei die Schicht der zweiten Zutat auf der zweiten oberen und/oder der zweiten unteren Fläche mit einer zweiten Füllung beschichtet ist; und Anordnen der zweiten Verbundschicht auf der Oberseite -der ersten Verbundschicht, wobei die erste obere Fläche und die zweite untere Fläche einander gegenüberliegen.

2. Verfahren nach Anspruch 1, wobei die erste und die zweite Zutat gewählt sind aus getrockneten Nudeln, gekochten Nudeln, rohen Auberginen, gekochten Auberginen, rohen Zucchini, gekochten Zucchini, rohem Fleisch, gekochtem Fleisch, Früchten und gekochten Früchten.

3. Verfahren nach Anspruch 2, wobei die erste und die zweite Zutat gleich sind.

4. Verfahren nach einem der vorhergehenden Ansprüche, wobei die erste und die zweite Füllung ausgewählt sind aus Ragout, vegetarischem Eintopf, Fleischeintopf, Käse, irgendeiner Kombination aus den vorangehenden Bestandteilen und Früchteeintopf.

5. Verfahren nach Anspruch 4, wobei die erste und die zweite Füllung gleich sind.

6. Verfahren nach einem der vorhergehenden Ansprüche, der den zusätzlichen Schritt des Vorsehens einer ersten Soßenlage gegenüber der ersten unteren Fläche umfasst.

7. Verfahren nach Anspruch 6, wobei die Soßenlage ausgewählt ist aus Bechamelsoße, pikanter Soße und süßer Soße.

8. Verfahren nach einem der vorhergehenden Ansprüche, der den zusätzlichen Schritt des Vorsehens einer ersten Käselage gegenüber der zweiten oberen Fläche umfasst.

9. Verfahren nach Anspruch 8, wobei der Käse Parmesankäse ist.

10. Gefrorenes geschichtetes Lebensmittelprodukt, das gemäß dem Verfahren nach einem der vorhergehenden Ansprüche hergestellt ist.

11. Vorrichtung zum Herstellen eines gefrorenen geschichteten Lebensmittelprodukts, wobei die Vorrichtung umfasst: eine erste Beförderungseinrichtung, die mehrere erste Tabletts enthält, wobei jedes erste Tablett eine Schicht einer Lebensmittelzutat befördert, eine Station zum dosierten Zuführen einer Füllung auf eine Fläche einer Schicht der Lebensmittelzutat, um dadurch eine Verbundschicht zu bilden, eine erste Gefriereinrichtung, um eine Verbundschicht zu gefrieren, um dadurch eine gefrorene Verbundschicht zu bilden, ein Mittel zum Führen einer gefrorenen Verbundschicht auf ein erstes Tablett an einem stromaufseitigen Ort der Beförderungseinrichtung, wobei das Mittel geeignet ist, eine n-te gefrorene Verbundschicht auf eine (n - 1)-te gefrorene Verbundschicht an dem stromaufseitigen Ort oder an einem stromabseitigen Ort zu führen, um dadurch ein geschichtetes Lebensmittelprodukt zu bilden, und eine zweite Gefriereinrichtung, um das geschichtete Lebensmittelprodukt zu gefrieren, wobei sich die zweite Gefriereinrichtung stromabseitig von dem stromabseitigen Ort befindet.

12. Vorrichtung nach Anspruch 11, die zusätzlich eine erste Soßenstation umfasst, um einem ersten Tablett stromaufseitig von dem stromaufseitigen Ort eine Soßenschicht dosiert zuzuführen.

13. Vorrichtung nach Anspruch 11 oder Anspruch 12, die zusätzlich eine erste Käsestation umfasst, um einer Fläche einer Verbundschicht in einem ersten Tablett zwischen dem stromaufseitigen Ort und dem stromabseitigen Ort eine Schicht aus Käse dosiert zuzuführen.

14. Vorrichtung nach einem der Ansprüche 11 bis 13, die zusätzlich eine zweite Käsestation umfasst, um einer Fläche einer Verbundschicht in einem ersten Tablett zwischen dem stromabseitigen Ort und der zweiten Gefriereinrichtung eine Schicht aus Käse dosiert zuzuführen.

15. Vorrichtung nach einem der Ansprüche 11 bis 14, wobei die Station zum dosierten Zuführen einer Füllung eine zweite Beförderungseinrichtung umfasst, die mehrere zweite Tabletts enthält, wovon jedes dazu ausgelegt ist, eine Schicht aus einer Zutat zu befördern, wobei jedes zweite Tablett Seitenwände aufweist, die zwischen einer ersten Position in der Ebene der Grundfläche des zweiten Tabletts und einer zweiten Position, in der die Kante der Seitenwände entfernt von der Grundfläche des zweiten Tabletts über die Ebene der Grundfläche erhöht ist, schwenken, und Mittel aufweist, um die Seitenwände von der ersten in die zweite Position anzuheben, um dadurch die Füllung auf der Zutatenschicht vor dem Gefrieren der Verbundschicht zu halten.

## Revendications

1. Procédé de fabrication d'un produit alimentaire multicouche congelé comprenant les étapes consistant à : fournir une première feuille composite précongelée qui comprend une feuille d'un premier ingrédient et une première garniture, la feuille du premier ingrédient comprenant une première face supérieure et une première face inférieure, la feuille du premier ingrédient étant revêtue sur l'une au moins de la première face supérieure et de la première face inférieure d'une première garniture ; fournir une deuxième feuille composite précongelée qui comprend une feuille d'un deuxième ingrédient et une deuxième garniture, la feuille du deuxième ingrédient comprenant une deuxième face supérieure et une deuxième face inférieure, la feuille du deuxième ingrédient étant revêtue sur l'une au moins de la deuxième face supérieure et de la deuxième face inférieure d'une deuxième garniture ; et placer la deuxième feuille composite sur la première feuille composite, dans lequel la première face supérieure et la deuxième face inférieure sont opposées.

2. Procédé selon la revendication 1, dans lequel le premier ingrédient et le deuxième ingrédient sont sélectionnés dans le groupe constitué par les pâtes sèches, les pâtes cuites, les aubergines crues, les aubergines cuites, les courgettes crues, les courgettes cuites, la viande crue, la viande cuite, les fruits, et les fruits cuits.

3. Procédé selon la revendication 2, dans lequel les premier et deuxième ingrédients sont identiques.

4. Procédé selon l'une quelconque des revendications précédentes, dans lequel les première et deuxième garnitures sont sélectionnées dans le groupe constitué par le ragoût, la ratatouille, le fromage pour ragoût de viande, n'importe quelle association des éléments qui précèdent, et la salade de fruits.

5. Procédé selon la revendication 4, dans lequel les première et deuxième garnitures sont identiques.

6. Procédé selon l'une quelconque des revendications précédentes, comprenant l'étape supplémentaire consistant à fournir une première couche de sauce à l'opposé de la première face inférieure.

7. Procédé selon la revendication 6, dans lequel la couche de sauce est sélectionnée dans le groupe constitué par la béchamel, une sauce salée et une sauce sucrée.

8. Procédé selon l'une quelconque des revendications précédentes, comprenant l'étape supplémentaire consistant à fournir une première couche de fromage à l'opposé de la deuxième face supérieure.

9. Procédé selon la revendication 8, dans lequel le fromage est du parmesan.

10. Produit alimentaire multicouche congelé réalisé selon le procédé de l'une quelconque des revendications précédentes.

11. Appareil de fabrication d'un produit alimentaire multicouche congelé, l'appareil comprenant un premier convoyeur qui comprend une pluralité de premiers plateaux, chaque premier plateau convoyant une feuille d'ingrédient alimentaire, une station destinée à doser une garniture sur une face d'une feuille d'ingrédient alimentaire, de manière à former de ce fait une feuille composite, un premier congélateur afin de congeler une feuille composite de manière à former de ce fait une feuille composite congelée, des moyens destinés à guider une feuille composite congelée sur un premier plateau au niveau d'un emplacement situé en amont sur le convoyeur, lesdits moyens étant appropriés pour guider une ne feuille composite congelée sur une (n - 1)^{eme} feuille composite congelée au niveau d'un emplacement situé en amont ou en aval de manière à former de ce fait un produit alimentaire multicouche, et un deuxième congélateur destiné à congeler le produit alimentaire multicouche, le deuxième congélateur étant situé en aval de l'emplacement situé en aval.

12. Appareil selon la revendication 11, comprenant en outre une première station de dosage de sauce destinée à doser une couche de sauce sur un premier plateau en amont dudit emplacement situé en amont.

13. Appareil selon la revendication 11 ou la revendication 12, comprenant en outre une première station de dosage de fromage destinée à doser une couche de fromage sur une face d'une feuille composite dans un premier plateau entre ledit emplacement situé en amont et ledit emplacement situé en aval.

14. Appareil selon l'une quelconque des revendications 11 à 13, comprenant en outre une deuxième station de dosage de fromage destinée à doser une couche de fromage sur une face d'une feuille composite dans un premier plateau entre ledit emplacement situé en aval et ledit deuxième congélateur.

15. Appareil selon l'une quelconque des revendications 1 à 14, dans lequel la station destinée à doser une garniture comprend un deuxième convoyeur qui comprend une pluralité de deuxièmes plateaux, chacun d'eux étant adapté pour convoyer une feuille d'ingrédient, chaque deuxième plateau comprenant des parois latérales qui pivotent entre une première position située dans le plan de la base du deuxième plateau, et une deuxième position dans laquelle le bord des parois latérales distal de la base du deuxième plateau, est relevé au-dessus du plan de la base, et des moyens destinés à relever de ce fait les parois latérales à partir de la première position vers la deuxième position, de manière à retenir de ce fait la garniture sur la feuille d'ingrédient avant de congeler la feuille composite.
